# EUROPÄISCHE PATENTSCHRIFT

(11) **EP 3 641 581 B1**
(45) Veröffentlichungstag und Bekanntmachung des Hinweises auf die Patenterteilung: **02.03.2022**
(21) Anmeldenummer: 18732740.8
(22) Anmeldetag: 19.06.2018
(51) Int. Cl.: A43C 7/04, F16G 11/10, A43C 7/08, A43C 11/14

(54) **SCHNELLSCHNÜRSYSTEM SOWIE DAMIT AUSGESTATTETER SCHUH**
QUICK LACING SYSTEM AND SHOE EQUIPPED WITH SAME
SYSTÈME DE LAÇAGE RAPIDE AINSI QUE CHAUSSURE ÉQUIPÉE DUDIT SYSTÈME

(30) Priorität: 21.06.2017 DE 102017113778
(43) Veröffentlichungstag der Anmeldung: 29.04.2020
(73) Patentinhaber: Dee Luxe Sportartikel Handels GmbH, 6322 Kirchbichl/Tirol (AT)
(72) Erfinder: MEINHARDT, Maximilian, 6020 Innsbruck (AT)
(74) Vertreter: Pfrang, Tilman
(86) Internationale Anmeldenummer: PCT/EP2018/066172
(87) Internationale Veröffentlichungsnummer: WO 2018/234264

(56) Entgegenhaltungen:
- EP-A1- 0 012 126
- EP-A1- 1 495 691
- GB-A- 2 481 849
- GB-A- 191 504 857
- US-A- 5 572 770
- US-B1- 6 729 000

## Beschreibung

Die Erfindung betrifft ein Schnellschnürsystem gemäß dem Oberbegriff von Patentanspruch 1 sowie einen mit einem solchen Schnellschnürsystem ausgestatteten Schuh gemäß dem Oberbegriff von Patentanspruch 7.

Schuhe, die Schnürsenkel aufweisen, sind im Vergleich zu schnürsenkellosen Schuhen, wie beispielsweise sogenannten Slippern, oder auch im Vergleich zu Schuhen mit Klettverschluß, nach wie vor weit verbreitet. Üblicherweise werden die Schnürsenkel nach dem Anziehen der Schuhe durch Binden von Schlaufen gegen selbsttätiges Lösen gesichert. Dabei handelt es sich um eine umständliche Tätigkeit, die erst erlernt werden muss und nicht selbsterklärend ist.

Um die Notwendigkeit des Bindens von Schlaufen zu umgehen, ist beispielsweise in der DE 891 065 eine Klemmvorrichtung für Schnürsenkel beschrieben, mit deren Hilfe die Schnürsenkel beliebig straff gezogen und festgeklemmt werden können. Einer unsachgemäßen Schlaufenöffnung und einem damit verbundenen Knoten in den Schnürsenkeln beim Ausziehen der Schuhe wird mit Hilfe vorgenannter Klemmvorrichtung entgegengewirkt. Die in der DE 891 065 dargestellte Klemmvorrichtung besteht im wesentlichen aus einem keilförmig zulaufenden Gehäuse und einem korrespondierenden Keil, der die jeweiligen Schnürsenkelenden in einer Geschlossenstellung der Klemmvorrichtung gegen die Gehäusewand drückt und dadurch klemmend arretiert.

Um eine Offenstellung der Klemmvorrichtung zu erreichen, d.h. eine Stellung, in der die Schnürsenkel innerhalb der Klemmvorrichtung bewegt werden können, muß der Keil manuell in die Offenstellung gebracht werden. Um ein erneutes Einklemmen der Schnürsenkel in einer Geschlossenstellung zu vermeiden, muß der Keil weiterhin manuell in Offenstellung gehalten werden, mit der Konsequenz, dass eine Hand des Benutzers zum Halten des Keils in Offenstellung benötigt wird, solange der Schnürsenkel bewegt werden soll. Dies ist unpraktisch, da der Benutzer somit nur eine freie Hand für andere Aufgaben, wie beispielsweise das Straffen der Schnürsenkel, zur Verfügung hat.

Eine diesbezügliche Verbesserung ist in der US 6,339,867 B1 beschrieben. So ist aus dieser Druckschrift eine Klemmvorrichtung für Schnürsenkel bekannt, die in Offenstellung verrastbar ist. Allerdings weist diese Klemmvorrichtung eine komplizierte Konstruktion auf und es ist erheblich Kraft notwendig, um die Klemmvorrichtung aus ihrer Offenstellung in ihre Geschlossenstellung zu bringen.

Die GB 04 857 A offenbart ferner eine Seilklemme mit einer Wippe, die durch einen Zug an einem Seil in eine Sperrposition gedrängt wird; allerdings ist keine Arretierungsvorrichtung vorgesehen, damit die Seilsperre tatsächlich erhalten bleibt. Vielmehr ist gemäß der GB 04 857 A ein exzentrisch gelagertes Gegengewicht vorgesehen, um die Wippe standardmäßig in eine Sperrposition zu bewegen; eine Sicherung der Sperrposition ist nicht gewährleistet.

All diesen bisher bekannten Klemmvorrichtungen für Schnürsenkel ist gemeinsam, dass diese zum einen aufwändige Konstruktionen erfordern und darüber hinaus kompliziert und schwierig zu bedienen sind oder in der Sperrposition nicht sicher arretieren.

Der Erfindung liegt die Aufgabe zugrunde, diese vorgenannten Nachteile zu lösen und ein Schnürsystem, insbesondere ein Schnellschnürsystem, sowie einen damit ausgestatteten Schuh zur Verfügung zu stellen, das einfach und intuitiv bedienbar ist.

Diese Aufgabe wird durch ein Schnellschnürsystem gemäß Patentanspruch 1 sowie durch einen Schuh gemäß Patentanspruch 7 gelöst.

Insbesondere wird diese Aufgabe durch ein Schnellschnürsystem zum lösbaren Fixieren wenigstens eines Schnürsenkels mit einem Gehäuse, welches einen Kanal zur Durchführung von wenigstens einem Schnürsenkel aufweist, gelöst, wobei der Kanal auf einer ersten Seite zumindest abschnittweise von einer beweglich gelagerten Wippe mit einer im Wesentlichen konkaven Innenseite, die in Richtung des Kanals gerichtet ist und auf einer zweiten, der Wippe im Wesentlichen gegenüberliegenden, Seite zumindest abschnittweise von einer exzentrischen Backe gebildet ist, die mit der Wippe zumindest in einer Schließstellung des Schnellschnürsystems zusammenwirkt, wobei die Wippe einen Schließabschnitt und einen Öffnungsabschnitt aufweist und wobei der Schließabschnitt während eines Schließvorgangs in Richtung einer durch einen Benutzer ausgeübten Zugrichtung und der Öffnungsabschnitt in Benutzungsstellung des Schnellschnürsystems in der im Wesentlichen entgegengesetzten Richtung der Wippe angeordnet ist und wobei der Schließabschnitt von einem sich im Rahmen des Schließvorgangs straffenden Schnürsenkel von der Backe weg in eine Halteposition gedrängt wird und sich der Öffnungsabschnitt der Backe nähert und wobei die Wippe in der Halteposition durch Einrasten und/oder Einschnappen, arretiert ist.

Die Erfindung wird ferner durch ein Schnellschnürsystem zum lösbaren Fixieren wenigstens eines Schnürsenkels mit einem Gehäuse, welches einen Kanal zum Durchführung von wenigstens einem Schnürsenkel aufweist, gelöst, wobei der Kanal auf einer ersten Seite zumindest abschnittweise von einer beweglich gelagerten Wippe mit einer im Wesentlichen konkaven Innenseite, die in Richtung des Kanals gerichtet ist und auf einer zweiten, der Wippe im Wesentlichen gegenüberliegenden, Seite zumindest abschnittweise von einer exzentrischen Backe gebildet ist, die mit der Wippe zumindest in einer Schließstellung des Schnellschnürsystems zusammenwirkt, wobei die Wippe einen Schließabschnitt und einen Öffnungsabschnitt aufweist und wobei der Schließabschnitt während eines Schließvorgangs in Richtung einer durch einen Benutzer ausgeübten Zugrichtung und der Öffnungsabschnitt in Benutzungsstellung des Schnellschnürsystems in der im Wesentlichen entgegengesetzten Richtung der Wippe angeordnet ist und wobei der Schließabschnitt von einem sich im Rahmen des Schließvorgangs straffenden Schnürsenkel von der Backe weg in eine Halteposition gedrängt wird und sich der Öffnungsabschnitt der Backe nähert und wobei die Wippe in der Halteposition durch Einrasten und/oder Einschnappen und/oder Sperren, arretiert und/oder blockiert ist.

Ein wesentlicher Punkt der Erfindung liegt darin, dass das erfindungsgemäße Schnellschnürsystem ein Gehäuse aufweist, in welchem eine Wippe beweglich gelagert ist, die eine Krümmung aufweist, nämlich dergestalt, dass eine konkave Innenseite der Wippe in Richtung eines in dem Gehäuse ausgebildeten Kanals gerichtet ist. Der Wippe gegenüber ist ferner eine exzentrische Backe angeordnet, die ihrerseits zumindest abschnittweise einen Teil des Kanals bildet. Im Benutzungszustand des erfindungsgemäßen Schnellschnürsystems erstreckt sich wenigstens ein Schnürsenkel durch den Kanal und zwischen der konkaven Innenseite der Wippe und der exzentrischen Backe hindurch.

Die Wippe ist derart ausgebildet, dass diese einen Teil des Kanals begrenzt und schaukelartig um einen Drehpunkt gelagert ist. Die Wippe weist einen Schließabschnitt und einen Öffnungsabschnitt auf. Der Schließabschnitt und der Öffnungsabschnitt sind hierbei an entgegengesetzten Enden der Wippe angeordnet, wobei sich der Schließabschnitt an dem Ende der Wippe befindet, das sich in Richtung der Hand eines Benutzers erstreckt, der das Schnellschnürsystem bedient und durch Zug einen Schließvorgang bewirkt. Dem entgegengesetzt befindet sich der Öffnungsabschnitt der Wippe, der sich in Richtung des von einem Schuh kommenden Schnürsenkels erstreckt.

Ein wesentlicher Punkt der Erfindung liegt darin, dass die Wippe schaukelartig konzipiert ist und eine konkave Innenseite aufweist, wobei sich der Schließabschnitt in einem Offenzustand des Schnellschnürsystems in Richtung einer der Wippe gegenüberliegenden Seite des Kanals erstreckt. In diesem Offenzustand befindet sich der Öffnungsabschnitt der Wippe beabstandet zu der Backe auf der der Backe gegenüberliegenden Seite des Kanals.

Im Falle der Auslösung eines Schließvorgangs, respektive Fixiervorgangs, durch einen Benutzer, bei welchem der Benutzer an einem freien Ende des Schnürsenkels zieht, strafft sich der Schnürsenkel, da er einerseits am Schuh bzw. in Schlaufen eines Schuhs geführt und dadurch gehalten ist und andererseits von einem Benutzerzug ausgeübt wird. Durch das Straffen des Schnürsenkels wird bewirkt, dass dieser gespannt wird und dadurch an den den Kanal der Wippe verengenden Schließabschnitt der Wippe drückt und diesen automatisch von der Backe weg in eine Halteposition drängt, in welcher die Wippe, insbesondere durch Einrasten und/oder Einschnappen, arretiert wird. Gleichzeitig mit der Bewegung des Schließabschnitts der Wippe in Richtung Halteposition bewegt sich der Öffnungsabschnitt der Wippe auf die Backe zu und zwar dergestalt, dass der Öffnungsabschnitt der Wippe den Schnürsenkel so verlagert, dass die Backe, die vorzugsweise eine gezahnte Oberfläche aufweist, mit dem Schnürsenkel zumindest teilweise in Anlage kommt und mit dem Schnürsenkel gegen die konkave Innenseite des Öffnungsabschnitts der Wippe drückt und den Schnürsenkel hierbei gegen ein weiteres Zurückrutschen sichert, sobald ein durch einen Benutzer ausgeübter Zug zum Schließen, respektive Schnüren, des Schuhs auf den Schnürsenkel nachlässt. Durch das Nachlassen des Zugs im Rahmen des Schließvorgangs gleitet der Schnürsenkel in dem Kanal etwas zurück und blockiert hierbei an der vorzugsweise gezahnten Oberfläche der exzentrischen Backe, die drehbar gelagert ist und bewegt die Backe hierbei auf den Öffnungsabschnitt der Wippe zu, so dass der Schnürsenkel zwischen der exzentrischen Backe und der konkaven Innenseite des Öffnungsabschnitts der Wippe eingeklemmt wird.

Wie vorerwähnt, ist die Wippe in Geschlossenstellung des Schnellschnürsystems in einer Halteposition arretiert. Dies kann durch einen Rast- oder Schnappmechanismus realisiert sein, bei welchem beispielsweise eine Ausnehmung oder ein Haken, der an der Wippe ausgebildet ist, mit einer Entriegelungstaste oder einem Entriegelungshebel in Anlage oder in Eingriff kommt.

Diese Entriegelungstaste oder dieser Entriegelungshebel wird durch die Wippe, respektive einen an der Wippe angebrachten Haken, Zapfen oder sonstigen Angriffspunkt, zumindest in der Halteposition in eine Stellung gedrängt, in welcher die Entriegelungstaste oder ein Bedienabschnitt des Entriegelungshebels aus dem Gehäuse ragt, so dass ein Benutzer auf die Entriegelungstaste oder auf den Bedienabschnitt des Entriegelungshebels drücken und auf diese Weise die Arretierung der Wippe lösen kann.

Hierbei ist erfindungsgemäß vorgesehen, dass die Wippe, wenn diese durch den Schnürsenkel in die Halteposition gedrängt wird, automatisch arretiert und hierbei wiederum automatisch die Entriegelungstaste oder den Bedienabschnitt des Entriegelungshebels, gegebenenfalls entgegen einer Federwirkung, aus dem Gehäuse drückt, um eine Bedienbarkeit der Entriegelungstaste oder des Bedienabschnitts des Entriegelungshebels zu ermöglichen.

Gemäß einer alternativen Ausführungsform der Erfindung wird die Entriegelungstaste oder ein Bedienabschnitt freigegeben und durch eine Federkraft aus dem Gehäuse gedrängt, wenn der Schließabschnitt der Wippe während des Schließvorgangs von der Backe weg oder der Öffnungsabschnitt während des Schließvorgangs auf die Backe zu gedrängt wird, so dass die Entriegelungstaste oder der Bedienabschnitt für einen Lösevorgang einer Schnürung für einen Benutzer zugänglich wird. Gemäß dieser Ausführungsform ist die Entriegelungstaste oder ein Bedienabschnitt in einer Offenposition des Schnellschnürsystems durch den Öffnungsabschnitt der Wippe, insbesondere entgegen einer Federkraft, in dem Gehäuse gehalten. Wenn der Schnürsenkel nun im Zuge eines Schließvorgangs gespannt wird und hierbei gegen den Schließabschnitt der Wippe drückt und diesen hierdurch von der Backe weg drängt, bewegt sich der Öffnungsabschnitt der Wippe gleichermaßen auf die Backe zu und gibt hierbei die Entriegelungstaste oder den Bedienabschnitt frei, so dass die Entriegelungstaste oder der Bedienabschnitt, insbesondere durch die Unterstützung einer Feder, d.h. mittels Federkraft, aus dem Gehäuse herausgedrängt wird und auf diese Weise für einen Lösevorgang einer Schnürung für eine Benutzer zugänglich wird.

Im Rahmen des Schließvorgangs wird der Öffnungsabschnitt der Wippe hierbei aus einem Eingriff mit einem unteren Abschnitt der Entriegelungstaste frei, was wechselweise auch für die Entriegelungstaste gilt, woraufhin der Öffnungsabschnitt der Wippe durch das Spannen des Schnürsenkels in Richtung Backe gedrückt wird und der untere Abschnitt der Entriegelungstaste in seitliche Anlage mit dem Öffnungsabschnitt kommt und diesen Öffnungsabschnitt gegen ein Zurückrutschen sichert. Zum erneuten Öffnen der Schnürung wird die Entriegelungstaste entgegen der sie nach oben drängenden Federkraft wieder nach unten gedrückt, und zwar so lange, bis der Öffnungsabschnitt bei einem entspannten Schnürsenkel wieder mit dem unteren Teil der Entriegelungstaste in Eingriff kommt und die Entriegelungstaste auf diese Weise arretiert, so dass die Entriegelungstaste in ungeschnürtem Zustand des Schnellschnürsystems nicht nach oben aus dem Gehäuse bewegt werden kann.

Ein Lösen der Schnürung erfolgt erfindungsgemäß in äußerst vorteilhafter Weise dadurch, dass die Arretierung der Wippe aus der Halteposition gelöst wird, so dass die Wippe nach dem Lösen der Arretierung frei beweglich ist. Aufgrund dieser freien Beweglichkeit der Wippe wird diese nun durch den sich zwischen der Arretierung des Schnürsenkels zwischen dem konkaven Innenabschnitt des Öffnungsabschnitts und der Backe und dem Schuh, respektive den Ösen des Schuhs, erstreckenden straff gespannten Schnürsenkel von der Backe weg in die Offenposition des Schnellschnürsystems gedrückt, so dass die Klemmwirkung, welche die Backe gegen die konkave Innenseite des Öffnungsabschnitts ausgeübt hat, entfällt. In diesem Zustand kann der Schnürsenkel frei durch den Kanal hindurch bewegt und der Schuh geöffnet werden.

Ein wesentlicher Punkt der Erfindung liegt ferner darin, dass sich der Schnürsenkel sowohl bodenseitig, d.h. in Richtung Schuh gerichtet, als auch kopfseitig, d.h. in Richtung der Hand eines Benutzers gerichtet, frei aus dem Gehäuse des Schnellschnürsystems erstrecken kann und nicht durch das Gehäuse behindert wird. Auf diese Weise ist gewährleistet, dass die Wippe allein durch die Spannung des Schnürsenkels sowohl in die Halteposition gebracht als auch aus dieser wieder heraus bewegt werden kann.

Gemäß einer weiteren Ausführungsform der Erfindung ist die Backe als Doppelbacke ausgeführt, wobei die Doppelbacke aus zwei beweglichen Einzelbacken besteht, die gemäß einer besonders bevorzugten Ausführungsform unabhängig voneinander bewegt werden können. Diese Ausführungsform birgt den maßgeblichen Vorteil, dass ein oder zwei Schnürsenkel nicht mittels einer Backe gegen die konkave Innenseite des Öffnungsabschnitts der Wippe arretiert werden, sondern jeder Schnürsenkel separat. Des Weiteren umfasst die Erfindung auch die Möglichkeit, die Backe auch in mehr als zwei Einzelbacken zu unterteilen, die unabhängig voneinander beweglich sind. Letztere Ausführungsform kann dann sinnvoll sein, wenn mehr als zwei Schnürsenkel fixiert werden sollen. Im Übrigen hat die Ausführung der Backe als Doppelbacke auch den maßgeblichen Vorteil, dass ein Verdrehen der Schnürsenkel jedoch unmöglich ist, wenn die einzelnen Backen der Doppelbacke durch eine Trennwand voneinander getrennt sind.

Des Weiteren wird die erfindungsgemäße Aufgabe auch durch einen Schuh gemäß Patentanspruch 7 gelöst, der mit wenigstens einem Schnellschnürsystem gemäß vorstehenden Ausführungen ausgestattet ist.

Gemäß einer besonders bevorzugten Ausführungsform ist das Schnellschnürsystem an einem oberen Ende eines Schuhschafts, insbesondere zwischen einem Innenschuh oder einer Innenschale und einem Außenschuh oder einer Außenschale, vorzugsweise in einer für das Schnellschnürsystem vorgesehenen Ausnehmung, angeordnet.

Des Weiteren weist der erfindungsgemäße Schuh vorteilhafterweise beidseitig des Schuhschafts jeweils ein Schnellschnürsystem auf.

Zusammenfassend können die wesentlichen Punkte der Erfindung somit wie folgt festgehalten werden:
Die Klemmvorrichtung für Schnellschnürsysteme an Snowboardschuhen besteht gemäß einer bevorzugten Ausführungsform der Erfindung aus fünf Teilen. Eine Halterung für das erfindungsgemäße Schnellschnürsystem sitzt erfindungsgemäß bündig zum oberen Rand des Schafts an der, vom bisherigen FLD bekannten Position, ist aber zwischen Obermaterial und Futtermaterial festgenäht. Somit sieht man das Schnellschnürsystem in in einen Schuhschaft eingebautem Zustand nur in der Draufsicht.

Bei der Fertigung des Schuhs wird ein Gehäuse, nach einem Einlegen der anderen Bauteile, nämlich der Wippe, der Backe und der Entriegelungstaste bzw. des Entriegelungshebels sowie nach einem Einfädeln der Schnürsenkel, von oben in die Halterung geschoben und rastet in der korrekten Position ein. Zu diesem Zweck sind in der Halterung Positionsrasten vorgesehen. Es schließt dann bündig am oberen Rand ab. Sofern ein Austausch des Schnellschnürsystems gewünscht ist, kann das Schnellschnürsystem in vorteilhafter Weise aus der Halterung genommen und ersetzt werden.

Im Inneren des Gehäuses befindet sich ein Druckknopf, der nur in verriegeltem Zustand von außen gut sichtbar und erreichbar ist, eine Wippe und eine exzentrische Backe, welche für besseren Halt des Schnürsenkels mit Zähnen versehen ist.

Die Schnürsenkel verlaufen zwischen der Backe und der Wippe. Zieht man nun an den Schnürsenkeln, um den Schuh zu schließen, wird dadurch der obere Teil der Wippe in Richtung Druckknopf gedrückt, wo sie mechanisch verriegelt wird. Der untere Teil der Wippe wird damit so nah an die Backe gebracht, dass beide Komponenten Druck auf die Schnürsenkel ausüben. Durch die exzentrische Form der Backe ist ein weiteres Ziehen an den Schnürsenkeln möglich, lässt man diese allerdings los, werden sie automatisch verklemmt.

Um die Klemmvorrichtung zu entriegeln, drückt man den Druckknopf zurück ins Gehäuse, um die Wippe zu lösen. Da die Schnürsenkel davor unter hoher Spannung stehen, drücken sie den unteren Teil der Wippe so weit zur Seite, dass sie wieder frei durch die Klemmvorrichtung laufen können.

Der Aufbau ermöglicht die Verwendung von sowohl ein, oder zwei, für Schnellschnürsysteme übliche Schnürsenkel, als auch alternativ einem klassischen Schnürsenkel.

Statt der einzelnen Backe gibt es noch die Möglichkeit einer doppelten Backe, die zwei Schnürsenkel unabhängig voneinander verklemmt. Die doppelte Backe besteht aus zwei einzelnen, schmaleren Backen, die über eine integrierte Achse verbunden werden. Eine Trennwand, welche nur an einer der beiden schmaleren Backen nötig ist, verhindert das Überkreuzen der Schnürsenkel. Diese Möglichkeit bietet sich allerdings nur bei der Verwendung zweier, für Schnellschnürsysteme übliche Schnürsenkel.

Die Vorteile der Erfindung können wie folgt zusammengefasst werden:
Die Interaktion mit der Klemmvorrichtung ist auf ein Minimum reduziert. Beim Schnüren des Schuhs muss man lediglich an den Schnürsenkeln ziehen, die Verriegelung funktioniert automatisch. Zum Öffnen des Schuhs muss nur ein Knopf gedrückt werden und die Schnürsenkel sind gelöst. Dieses Prinzip macht die Klemmvorrichtung einfacher und intuitiver verständlich und der Schuh ist sehr schnell geschnürt.

Die exzentrische Backe kann so weit gedreht werden, dass kein Spalt mehr zwischen ihr und der Wippe ist, was nicht nur eine äußerst starke Verklemmung verspricht. Ein abgenutzter, schon dünnerer Schnürsenkel beispielsweise, wird dadurch immer noch genau so fest gehalten, als wäre er neu. Nicht zuletzt ermöglicht es den Einsatz verschieden starker Schnürsenkel, wodurch neuartige Schnürverläufe realisierbar werden. Es wäre beispielsweise ein Schnellschnürsystem mit klassischen Schnürsenkeln denkbar, ohne dass eine andere Klemmvorrichtung benötigt wird. Auch die Benützung von ein oder zwei dünnen Schnürsenkeln ist ohne große Anpassung möglich. Im Hinblick auf eine komplette Kollektion an Snowboardschuhen können damit Formenkosten verringert werden, während mehr verschiedene Schuhkonstruktionen möglich sind.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung einer ersten Ausführungsform gemäß der Erfindung mit einem Schnellschnürsystem in Offenstellung;
- Fig. 2: eine schematische Darstellung der in Fig. 1 dargestellten Ausführungsform der Erfindung im Halb-Geschlossenstellung;
- Fig. 3: eine schematische Darstellung der in Fig. 1 dargestellten Ausführungsform der Erfindung in Geschlossenstellung;
- Fig. 4: eine schematische Darstellung einer weiteren Ausführungsform gemäß der Erfindung mit einem Schnellschnürsystem in Offenstellung;
- Fig. 5: eine schematische Darstellung der in Fig. 4 dargestellten Ausführungsform der Erfindung im Halb-Geschlossenstellung;
- Fig. 6: eine schematische Darstellung der in Fig. 4 dargestellten Ausführungsform der Erfindung in Geschlossenstellung;
- Fig. 7: eine schematische Darstellung einer weiteren Ausführungsform gemäß der Erfindung mit einem Schnellschnürsystem in Offenstellung;
- Fig. 8: eine schematische Darstellung der in Fig. 7 dargestellten Ausführungsform der Erfindung im Halb-Geschlossenstellung;
- Fig. 9: eine schematische Darstellung der in Fig. 7 dargestellten Ausführungsform der Erfindung in Geschlossenstellung;
- Fig. 10: eine schematische Darstellung einer erfindungsgemäßen Doppelbacke mit synchron bewegten Backen;
- Fig. 11: eine schematische Darstellung einer erfindungsgemäßen Doppelbacke mit assynchron bewegten Backen;
- Fig. 12: eine schematische Darstellung eines erfindungsgemäßen Schuhs, der mit zwei erfindungsgemäßen Schnellschnürsystemen ausgestattet ist;
- Fig. 13: eine schematische Darstellung einer zweiten Ausführungsform gemäß der Erfindung mit einem Schnellschnürsystem in Offenstellung;
- Fig. 14: eine schematische Darstellung der in Fig. 13 dargestellten Ausführungsform der Erfindung im Halb-Geschlossenstellung;
- Fig. 15: eine schematische Darstellung der in Fig. 13 dargestellten Ausführungsform der Erfindung in Geschlossenstellung;
- Fig. 16: eine schematische Darstellung der in Fig. 13 dargestellten Ausführungsform der Erfindung in geöffneter Stellung.

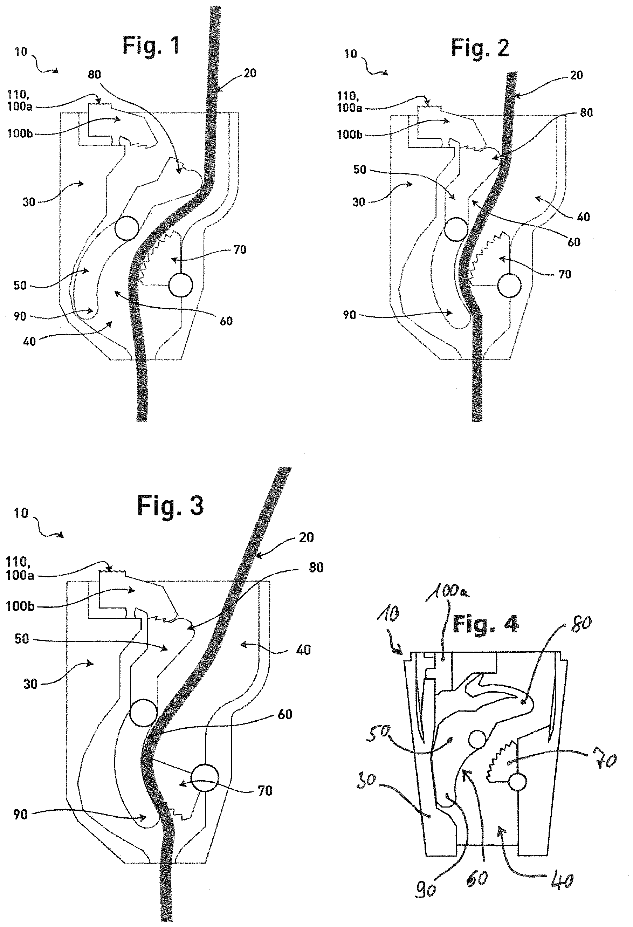

Fig. 1 zeigt eine schematische Darstellung eines erfindungsgemäßen Schnellschnürsystems 10. Das Schnellschnürsystem 10 weist einen Kanal 40 auf, der sich durch ein Gehäuse 30 erstreckt. Durch den Kanal 40 hindurch erstreckt sich ein Schnürsenkel 20. Der Kanal 40 ist gemäß Fig. 1 linksseitig abschnittsweise durch eine Wippe 50 und rechtsseitig abschnittsweise durch eine Backe 70 begrenzt. Die Wippe 50 weist einen Schließabschnitt 80 auf, der sich in Fig. 1 in Richtung oberes Ende des Schnellschnürsystems 10 erstreckt, aus welcher ein Zug zum Schließen, respektive Schnüren des Schnellschnürsystems 10 erfolgt, wenn ein Benutzer einen Schließvorgang ausführt. Am gegenüberliegenden Ende der Wippe 50 befindet sich ein Öffnungsabschnitt 90, dessen konkave Innenseite 60 mit der Backe 70 zusammenwirkt, um den Schnürsenkel 20 in einer Geschlossenstellung zu klemmen.

Wie aus Fig. 1 zu erkennen ist, erstreckt sich der Schließabschnitt 80 der Wippe 50 in Richtung der der Wippe gegenüberliegenden Seite des Kanals 40. Bei einem Zug an dem Schnürsenkel 20 nach oben, um einen Fixiervorgang des Schnürsenkels auszulösen, strafft sich der Schnürsenkel 20 und drückt gegen den Schließabschnitt 80 der Wippe 50 und bewegt diesen in Richtung einer Halteposition, in welcher die Wippe 50 mit einem Entriegelungshebel 100b in Eingriff kommt. Gleichzeitig mit der Bewegung des Schließabschnitts 80 in Richtung Halteposition, bewegt sich der Öffnungsabschnitt 90 mit seiner konkaven Innenseite 60 in Richtung der gezahnten Backe 70, so dass der Schnürsenkel 20 mit der Zahnung der Backe 70 in Kontakt kommt. Da die Wippe 50 in der Halteposition arretiert ist, kann der Öffnungsabschnitt 90 der Wippe 50 auch bei einem auftretenden Gegendruck durch Schnürsenkel 20 und Backe 70 nicht ausweichen, wenn der Schnürsenkel 20 zugentlastet wird und zusammen mit der exzentrischen Backe 70 gegen die konkave Innenseite 60 des Öffnungsabschnitts 90 der Wippe 50 gedrückt wird, so dass der Schnürsenkel zwischen der Backe 70 und der konkaven Innenseite 60 des Öffnungsabschnitts 90 der Wippe 50 geklemmt wird.

Zum Öffnen des Schnellschnürsystems 10 wird der Bedienabschnitt 110 des Entriegelungshebels 100b, respektive die Entriegelungstaste 100a, durch Drücken betätigt, so dass die Wippe 50 aus ihrer Halteposition in ihre Offenstellung bewegt werden kann. Diese Bewegung funktioniert aufgrund der Spannung des Schnürsenkels 20 automatisch, wobei der Öffnungsabschnitt 90 hierbei durch den Schnürsenkel 20, respektive durch die Spannung des Schnürsenkels 20 nach links und von der Backe 70 weg gedrückt wird.

In den Fig. 4 bis Fig. 9 sind weitere Ausführungsformen der Erfindung in schematischer Darstellung gezeigt, deren Klemm- und Öffnungsmechanismus identisch zu dem in den Fig. 1 bis Fig. 3 ist.

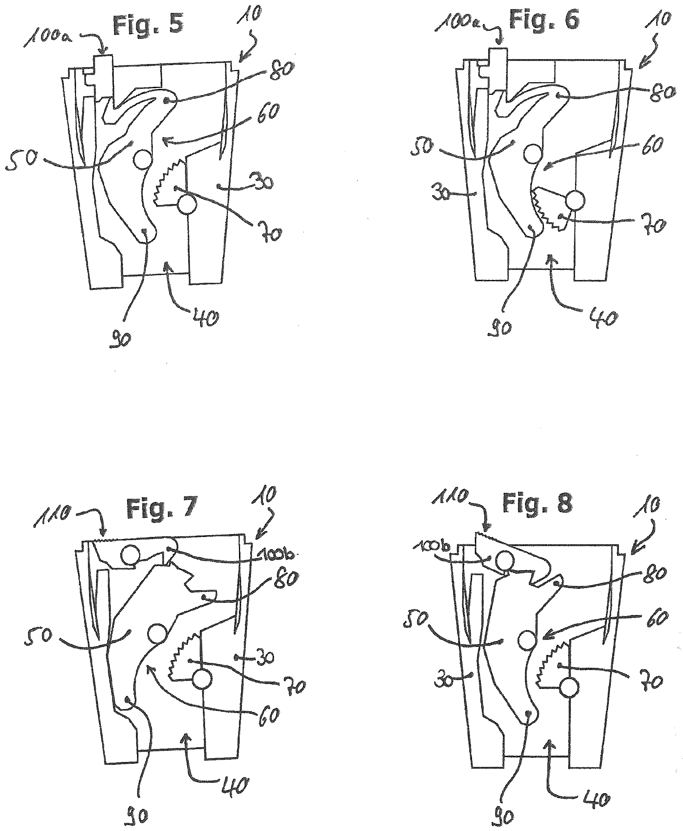

Im Gegensatz zu der in den Fig. 1 bis Fig. 3 dargestellten Ausführungsformen ist ein Bedienabschnitt 110, respektive eine Entriegelungstaste 100a bei den in den Fig. 4 bis Fig. 9 dargestellten Ausführungsformen allerdings nur sichtbar, wenn sich das erfindungsgemäße Schnellschnürsystem 10 in der Geschlossenstellung befindet. In diesem Zustand wird gemäß den Fig. 4 bis Fig. 6 eine Entriegelungstaste 100a durch einen an der Wippe 50 ausgebildeten Haken nach oben gedrückt, so das er aus dem Gehäuse 30 des Schnellschnürsystems 10 herausragt und von einem Benutzer zum Öffnen des Schnellschnürsystems 10 gedrückt werden kann. Gemäß den Fig. 7 bis Fig. 8 handelt es sich nicht um eine Entriegelungstaste, sondern um einen Entriegelungshebel 100b, dessen Bedienabschnitt 110 in Geschlossenstellung des Schnellschnürsystems 10 nach oben aus dem Gehäuse 30 des Schnellschnürsystems 10 ragt und in gleicher Weise zum Öffnen des Schnellschnürsystems 10 bedient werden kann.

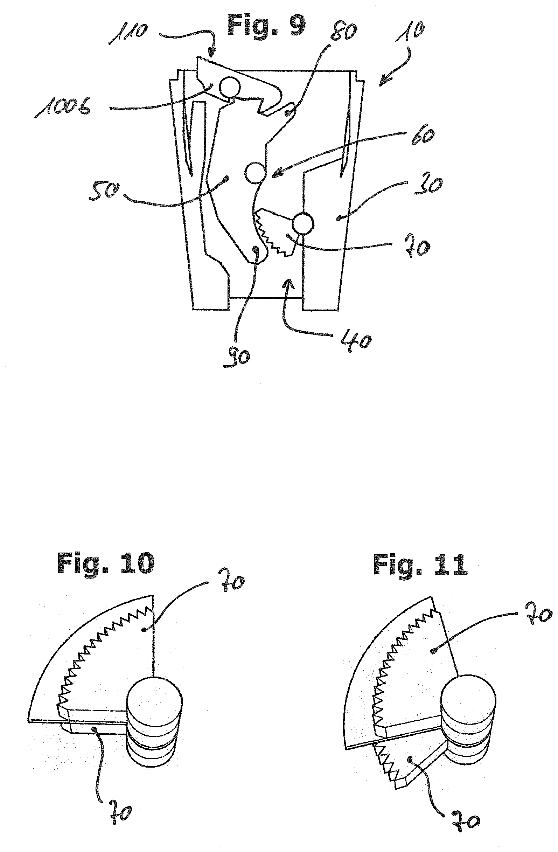

In den Fig. 10 und Fig. 11 ist ein Doppelbacken System mit zwei einzelnen gegeneinander beweglichen Einzelbacken 70 gezeigt, die in dem erfindungsgemäßen Schnellschnürsystem 10 alternativ zu einer Einzelbacke 70 eingesetzt werden können.

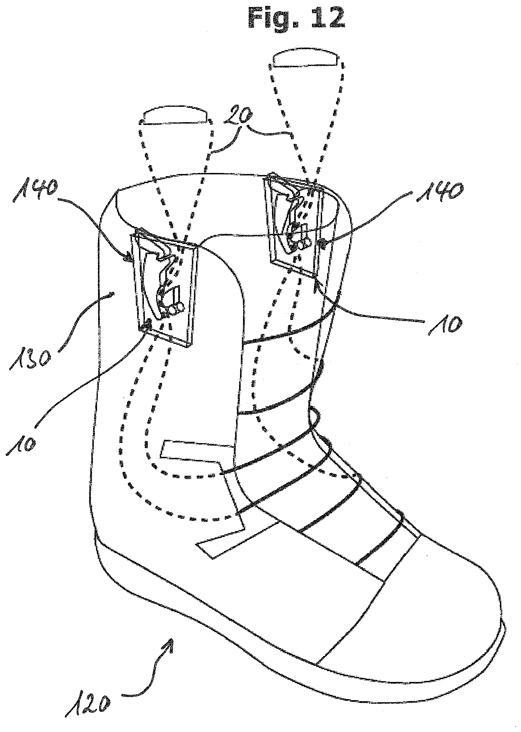

In Fig. 12 ist ein erfindungsgemäßer Schuh 120 dargestellt, in dessen Schuhschaft 130 beidseitig jeweils ein erfindungsgemäßes Schnellschnürsystem 10 in einer Ausnehmung 140 angeordnet ist.

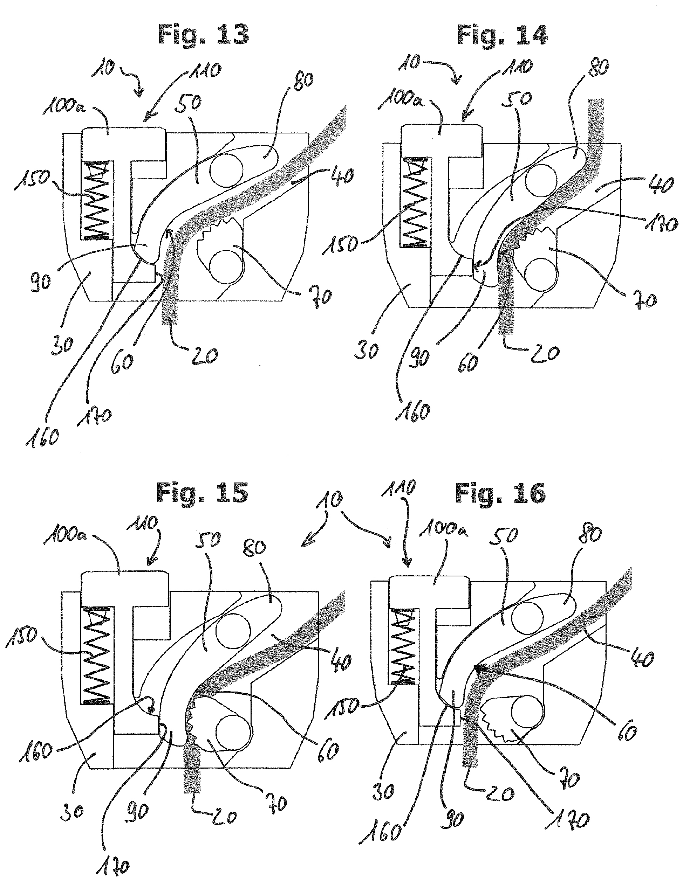

Fig. 13 zeigt eine schematische Darstellung einer zweiten Ausführungsform gemäß der Erfindung mit einem Schnellschnürsystem 10 in Offenstellung, bei welcher ein Schnürsenkel 20 durch einen Kanal 40 geführt ist, der in einem Gehäuse 30 angeordnet ist und gemäß Fig. 13 linksseitig von einer Wippe 50 mit einem Schließabschnitt 80 und einem Öffnungsabschnitt 90 und rechtsseitig von einer Backe 70 begrenzt ist. In der Öffnungsabschnitt 90 steht gemäß Fig. 13 in Eingriff mit einem Eingriffabschnitt 160 und arretiert damit die Entriegelungstaste 100a in gegen dem Druck einer Feder 150 in einer Stellung, in welcher die Entriegelungstaste 100a im Wesentlichen in das Gehäuse 30 des Schnellschnürsystems 10 zurückgezogen ist.

Zum Schließen des erfindungsgemäßen Schnellschnürsystems 10 wird, wie in Fig. 14 schematisch dargestellt ist, Zug auf den Schnürsenkel 20 in Richtung oben ausgeübt, wobei der Schnürsenkel 20 mit dem Schließabschnitt 80 der Wippe 50 in Anlage kommt und den Schließabschnitt 80 von der Backe 70 weg drängt, bzw. diesen Schlussabschnitt 80 in Richtung Entriegelungstaste 100a bewegt, wobei der Öffnungsabschnitt 90 aus dem Eingriff mit dem Eingriffabschnitt 160 heraus und in Richtung Backe 70 bewegt wird und wobei die Entriegelungstaste 100a aufgrund der Federkraft der Feder 150 nach oben aus dem Gehäuse 30 herausgedrängt wird. Durch diese Linearbewegung nach oben gleitet der Blockierabschnitt 170 der Entriegelungstaste 100a entlang der der Innenseite 60 gegenüberliegenden Außenseite des Öffnungsabschnitts 90 und verhindert auf diese Weise ein Ausweichen des Öffnungsabschnitts 90 der Wippe 50 während der Schnürsenkel 20 zwischen der Innenseite 60 der Wippe 50 und der Backe geklemmt wird. In diesem Zustand befindet sich das erfindungsgemäße Schnellschnürsystems 10 in einer Halb-Geschlossenstellung, da die Backe im Zuge des Schließens des Schnellschnürsystems 10 mit dem Schnürsenkel 20 noch nicht in einer Kompressionsanlage mit der Innenseite 60 der Wippe ist.

Fig. 15 zeigt eine schematische Darstellung der in Fig. 13 dargestellten Ausführungsform der Erfindung in Geschlossenstellung, wobei die Backe 70 nunmehr durch eine Entlastung des oberen Teils des Schnürsenkels 20 und den im unteren Teil des Schnürsenkels 20 aufgebaut Zug in eine Kompressionsanlage mit der Innenseite 60 der Wippe 50 in deren Öffnungsabschnitt 90 rutscht und den Schnürsenkel sicher klemmt und gegen ein versehentliches Öffnen sichert, während der Blockierabschnitt 170 den Öffnungsabschnitt 90 der Wippe 50 in seiner geschlossenen Stellung sichert. In dieser geschlossenen Stellung befindet sich die Entriegelungstaste 100a in einem aus dem Gehäuse 30 ausgerückten Zustand.

Fig. 16 zeigt eine schematische Darstellung der in Fig. 13 dargestellten Ausführungsform der Erfindung in geöffneter Stellung, wobei zum Öffnen des erfindungsgemäßen Schnellschnürsystems 10 Druck auf die Entriegelungstaste 100a ausgeübt wurde, so dass der Blockierabschnitt 170 unter den Öffnungsabschnitt 90 der Wippe 50 rutscht und hierbei den Öffnungsabschnitt 90 freigibt, wodurch der Schnürsenkel 20 ebenfalls aus der Klemmung zwischen der Innenseite 60 und der Backe 70 freigegeben wird und durch den Kanal 40 nach unten aus dem Gehäuse 30 Herausgleiten kann. Im Zuge eines erneuten Schließens des erfindungsgemäßen Schnellschnürsystems liegt der Schnürsenkel 20 sodann an der gezahnten Backe 70 an und nimmt die um eine drehbare Achse gelagerte Backe 70 in Richtung Fließabschnitt 80 der Wippe 50 mit, so dass der Schnürsenkel 20 bei einem weiteren Zug durch einen Benutzer wiederum in Anlage mit dem Schließabschnitt 80 kommt und diesen, wie oben beschrieben, zur Seite gedrängt, so das wiederum die Innenseite 60 der Wippe 50 in Anlage mit dem Schnürsenkel 20 kommt und diesen wiederum gegen die gezahnte Oberfläche der Backe 70 drängt.

### Bezugszeichenliste

- 10: Schnellschnürsystem
- 20: Schnürsenkel
- 30: Gehäuse
- 40: Kanal
- 50: Wippe
- 60: Innenseite
- 70: Backe
- 80: Schließabschnitt
- 90: Öffnungsabschnitt
- 100a: Entriegelungstaste
- 100b: Entriegelungshebel
- 110: Bedienabschnitt
- 120: Schuh
- 130: Schuhschaft
- 140: Ausnehmung
- 150: Feder
- 160: Eingriffabschnitt
- 170: Blockierabschnitt

## Patentansprüche

1. Schnellschnürsystem (10) zum lösbaren Fixieren wenigstens eines Schnürsenkels (20) mit einem Gehäuse (30), welches einen Kanal (40) zum Durchführung von wenigstens einem Schnürsenkel (20) aufweist, wobei der Kanal (40) auf einer ersten Seite zumindest abschnittweise von einer beweglich gelagerten Wippe (50) mit einer im Wesentlichen konkaven Innenseite (60), die in Richtung des Kanals (40) gerichtet ist und auf einer zweiten, der Wippe im Wesentlichen gegenüberliegenden, Seite zumindest abschnittweise von einer exzentrischen Backe (70) gebildet ist, die mit der Wippe (50) zumindest in einer Schließstellung des Schnellschnürsystems (10) zusammenwirkt, wobei die Wippe (50) einen Schließabschnitt (80) und einen Öffnungsabschnitt (90) aufweist,
**dadurch gekennzeichnet, dass**
der Schließabschnitt (80) während eines Schließvorgangs in Richtung einer durch einen Benutzer ausgeübten Zugrichtung und der Öffnungsabschnitt (90) in Benutzungsstellung des Schnellschnürsystems (10) in der im Wesentlichen entgegengesetzten Richtung der Wippe (50) angeordnet ist und wobei der Schließabschnitt (80) von einem sich im Rahmen des Schließvorgangs straffenden Schnürsenkel (20) von der Backe (70) weg in eine Halteposition gedrängt wird und sich der Öffnungsabschnitt (90) der Backe (70) nähert und wobei die Wippe (50) in der Halteposition durch Einrasten und/oder Einschnappen arretiert ist.

2. Schnellschnürsystem nach einem der vorhergehenden Ansprüche,
**dadurch gekennzeichnet, dass**
die Wippe (50) zumindest in der Halteposition in Anlage und/oder in Eingriff mit einer Entriegelungstaste (100a) oder einem Entriegelungshebel (100b) ist.

3. Schnellschnürsystem nach Anspruch 2,
**dadurch gekennzeichnet, dass**
die Entriegelungstaste (100a) oder ein Bedienabschnitt (110) des Entriegelungshebels (100b) zumindest in der Halteposition durch die Wippe (50), gegebenenfalls entgegen einer Federwirkung, aus dem Gehäuse (30) gedrängt wird, so dass die Entriegelungstaste (100a) oder der Bedienabschnitt (110) des Entriegelungshebels (100b) für einen Lösevorgang einer Schnürung für einen Benutzer zugänglich wird.

4. Schnellschnürsystem nach Anspruch 2,
**dadurch gekennzeichnet, dass**
die Entriegelungstaste (100a) oder ein Bedienabschnitt (110) freigegeben und durch eine Federkraft aus dem Gehäuse (30) gedrängt wird, wenn der Schließabschnitt (80) der Wippe (50) während des Schließvorgangs von der Backe (70) weg oder der Öffnungsabschnitt (90) während des Schließvorgangs auf die Backe (70) zu gedrängt wird, so dass die Entriegelungstaste (100a) oder der Bedienabschnitt (110) für einen Lösevorgang einer Schnürung für einen Benutzer zugänglich wird.

5. Schnellschnürsystem nach einem der vorhergehenden Ansprüche,
**dadurch gekennzeichnet, dass**
der Öffnungsabschnitt (90) der Wippe (50) von einem im Rahmen des Schließvorgangs gestrafften Schnürsenkel (20) von der Backe (70) weg gedrängt wird.

6. Schnellschnürsystem nach einem der vorhergehenden Ansprüche,
**dadurch gekennzeichnet, dass**
die Backe (70) als Doppelbacke mit zwei, sich insbesondere unabhängig voneinander, beweglichen Einzelbacken ausgebildet ist.

7. Schuh (120), insbesondere Snowboardschuh, mit wenigstens einem Schnellschnürsystem (10) nach einem der vorhergehenden Ansprüche.

8. Schuh nach Anspruch 7,
**dadurch gekennzeichnet, dass**
das Schnellschnürsystem (10) an einem oberen Ende eines Schuhschafts (130), insbesondere zwischen einem Innenschuh oder einer Innenschale und einem Außenschuh oder einer Außenschale, vorzugsweise in einer für das Schnellschnürsystem (10) vorgesehenen Ausnehmung (140), angeordnet ist.

9. Schuh nach Anspruch 8,
**dadurch gekennzeichnet, dass**
der Schuh beidseitig des Schuhschafts (130) jeweils ein Schnellschnürsystem (10) aufweist.

## Claims

1. Quick lacing system (10) for releasably fixing at least one shoelace (20), comprising a housing (30) having a channel (40) for feeding through at least one shoelace (20), wherein the channel (40) is formed on a first side at least in sections by a movably mounted rocker (50) having a substantially concave inner side (60), which is oriented in the direction of the channel (40), and on a second side, arranged substantially opposite the rocker, at least in sections by an eccentric jaw (70), which interacts with the rocker (50) at least in a closed position of the quick-lacing system (10), wherein the rocker (50) comprises a closing section (80) and an opening section (90),
**characterized in that** the closing section (80) is arranged in the direction of a pulling direction exerted by a user during a closing operation and the opening section (90) is arranged in the substantially opposite direction of the rocker (50) in the use position of the quick lacing system (10), and wherein the closing section (80) is urged away from the jaw (70) into a holding position by a shoelace (20) tightening during the closing process, and the opening section (90) approaches the jaw (70), and wherein the rocker (50) is locked in the holding position by latching and/or snap-fitting.

2. Quick lacing system according to one of the preceding claims, **characterized in that** the rocker (50), at least in the holding position, is in abutment and/or engagement with an unlocking button (100a) or an unlocking lever (100b).

3. Quick lacing system according to claim 2, **characterized in that** the unlocking button (100a) or an operating section (110) of the unlocking lever (100b), at least in the holding position, is pushed out of the housing (30) by the rocker (50), optionally against a spring action, so that the unlocking button (100a) or the operating section (110) of the unlocking lever (100b) becomes accessible to a user for a release operation of a lacing.

4. Quick lacing system according to claim 2, **characterized in that** the release button (100a) or an operating section (110) is released and forced out of the housing (30) by a spring force when the closing section (80) of the rocker (50) is urged away from the jaw (70) during the closing operation or the opening section (90) is urged toward the jaw (70) during the closing operation, so that the unlocking button (100a) or the operating section (110) becomes accessible to a user for a release operation of a lacing.

5. Quick lacing system according to one of the preceding claims, **characterized in that** the opening section (90) of the rocker (50) is urged away from the jaw (70) by a shoelace (20) tightened in the closing operation.

6. Quick lacing system according to one of the preceding claims, **characterized in that** the jaw (70) is designed as a double jaw with two individual jaws which can move in particular independently of one another.

7. Shoe (120), in particular snowboard boot, having at least one quick lacing system (10) according to one of the preceding claims.

8. Shoe according to claim 7, **characterized in that** the quick lacing system (10) is arranged at an upper end of a shoe upper (130), in particular between an inner shoe or an inner shell and an outer shoe or an outer shell, preferably in a recess (140) provided for the quick lacing system (10).

9. Shoe according to claim 8, **characterized in that** the shoe has a respective quick-lacing system (10) on both sides of the shoe upper (130).

## Revendications

1. Système de laçage rapide (10) pour la fixation pouvant être défaite d'au moins un lacet (20), avec un corps (30) possédant un canal (40) pour le passage d'au moins un lacet (20), lequel canal (40) est formé au moins en partie, sur un premier côté, par une bascule (50) supportée de façon mobile et munie d'une face intérieure (60) sensiblement concave qui est orientée vers le canal (40) et, sur un deuxième côté faisant sensiblement face à la bascule, au moins en partie par un mors excentrique (70) qui coopère avec la bascule (50) au moins dans une position de fermeture du système de laçage rapide (10), la bascule (50) comportant une partie de fermeture (80) et une partie d'ouverture (90), **caractérisé en ce que** la partie de fermeture (80) est disposée, pendant un mouvement de fermeture, dans le sens d'une traction exercée par un utilisateur et la partie d'ouverture (90), dans la position d'utilisation du système de laçage rapide (10), dans la direction sensiblement opposée à la bascule (50) et dans lequel la partie de fermeture (80) est repoussée vers une position de maintien écartée du mors (70) par le lacet (20) qui se tend pendant le mouvement de fermeture et la partie d'ouverture (90) se rapproche du mors (70), et dans lequel la bascule (50) est bloquée dans la position de maintien par enclenchement et/ou encliquetage.

2. Système de laçage rapide selon l'une des revendications précédentes, **caractérisé en ce que** la bascule (50) est en appui et/ou en prise, au moins dans la position de maintien, avec un bouton de déverrouillage (100a) ou un levier de déverrouillage (100b).

3. Système de laçage rapide selon la revendication 2, **caractérisé en ce que**, au moins dans la position de maintien, le bouton de déverrouillage (100a) ou une partie d'actionnement (110) du levier de déverrouillage (100b) est repoussée hors du corps (30) par la bascule (50), éventuellement contre l'action d'un ressort, de sorte que le bouton de déverrouillage (100a) ou la partie d'actionnement (110) du levier de déverrouillage (100b) devient accessible à l'utilisateur pour desserrer le laçage.

4. Système de laçage rapide selon la revendication 2, **caractérisé en ce que** le bouton de déverrouillage (100a) ou une partie d'actionnement (110) est débloquée et repoussée hors du corps (30) par une force de ressort quand la partie de fermeture (80) de la bascule (50) est écartée du mors (70) pendant le mouvement de fermeture ou que la partie d'ouverture (90) est rapprochée du mors (70) pendant le mouvement de fermeture, de sorte que le bouton de déverrouillage (100a) ou la partie d'actionnement (110) devient accessible à l'utilisateur pour desserrer le laçage.

5. Système de laçage rapide selon l'une des revendications précédentes, **caractérisé en ce que** la partie d'ouverture (90) de la bascule (50) est écartée du mors (70) par un lacet (20) tendu pendant le mouvement de fermeture.

6. Système de laçage rapide selon l'une des revendications précédentes, **caractérisé en ce que** le mors (70) est conformé comme un double mors avec deux mâchoires mobiles, en particulier indépendamment l'une de l'autre.

7. Chaussure (120), en particulier chaussure de snowboard, avec au moins un système de laçage rapide (10) selon l'une des revendications précédentes.

8. Chaussure selon la revendication 7, **caractérisée en ce que** le système de laçage rapide (10) est disposé à une extrémité supérieure d'une tige de chaussure (130), en particulier entre un chaussant intérieur ou une coque intérieure et un chaussant extérieur ou une coque extérieure, de préférence dans un creux (140) prévu pour le système de laçage rapide (10).

9. Chaussure selon la revendication 8, **caractérisée en ce qu'**elle comporte un système de laçage rapide (10) de part et d'autre de la tige de chaussure (130).
